# EUROPEAN PATENT APPLICATION

(11) **EP 1 414 251 A1**
(43) Date of publication of application: **28.04.2004**
(21) Application number: 04002269.1
(22) Date of filing: 18.01.1996
(51) Int. Cl.: H04N 9/804

(54) **Reproducing method of digital video tape for trick-play operation and reproducer suitable therefor**

(30) Priority: 23.01.1995 KR 9501073
(62) Divisional of application: 96300373.6
(71) Applicant: Samsung Electronics Co., Ltd., Suwon-si, Gyeonggi-do (KR)
(72) Inventor: Kim, Tae-eung, Suwon-city Kyungki-do (KR)
(74) Representative: Robinson, Ian Michael

(57) **Abstract**

The method includes first, second and third modes for reproducing data recorded on a digital video tape at 6.25m BPS bit rate, 12.5m BPS bit rate or 25m BPS bit rate, respectively. The method includes (a) reproducing the data recorded on the tape by increasing the tape travelling speed as N-times as a ratio of the higher bit rate to the lower bit rate and the head scanning speed as much as ratio when N-times speed trick-play operation is performed using the data recorded at the lower bit rate; and (b) demodulating DVB data reproduced by a head in a mode for trick-playing the tape having the data recorded at the higher bit rate with N/2-times speed; or (b) demodulating DVB data reproduced by a head in a mode for normal-playing the tape having the data recorded at the higher bit rate with the speed corresponding to the higher bit rate.

## Description

The present invention relates to a reproducing method of a digital video tape and a reproducer suitable for the method, and more particularly, to a method for reproducing video data for trick-play operation and a reproducer suitable for the method.

A high definition television (HDTV) has a vertical and horizontal resolution twice that of standard televisions and has fewer problems with a cross color phenomenon. HDTVs have CD-like sound quality and display images with an aspect ratio of 9:16, which is wider than the standard 3:4 aspect ratio.

The digital video tape recorder is suitable for recording the HDTV signal due to the wide bandwidth and high signal-to-noise ratio, compared with the analog video tape recorder. However, the bandwidth of the digital video tape recorder in the current technical range is only 25MHz, so that information of the HDTV having 1.2GHz bandwidth should be compressed to below 1/50. It has been known that the compression method according to the MPEG-2 is suitable for this purpose.

As a tape recording format, the usage of SD-VCR recording format has been standardized. However, the method to arrange the data for such trick-play operation as high speed playback, still picture reproduction and slow motion playback has not yet been standardized.

As a conventional trick play method, the trick-play data can be arranged on the trace scanned by a head in correspondence to each multiple speed. In this case, the screen quality reproduced during trick-play operation is excellent, but precise servo control (including speed locking, phase locking and track selection) is required for exactly scanning the trace on which the trick-play data is arranged, resulting in a complicated hardware design.

Another conventional method is to repeatedly record the trick-play data as many times as the number of the multiple, in the corresponding number of adjacent tracks. According to this method, since the head scans only one track among the multiple adjacent tracks, only speed lock servo control is required, so that hardware design costs are reduced. However, the recording region is excessively consumed by the repeated recording, and the "freeze" time for one screen is lengthened for lower multiple speeds, to thereby cause eye fatigue.

It is aim of preferred embodiments of the present invention to provide a digital video tape reproducing method for high-speed reproduction (e.g., fast-forward) of a signal recorded in a lower bit rate mode, without deterioration in screen quality.

It is another aim of preferred embodiments of the present invention to provide a reproducer suitable for the above reproducing method.

According to the present invention there is provided a digital video tape reproducing method as set forth in claim 1 or claim 7 appended hereto. Preferred features of the present invention will be apparent from the dependent claims and the description which follows.

Also according to the present invention there is provided a digital video tape reproducer as set forth in claim 11 appended hereto. Again preferred features of the present invention will be apparent from the dependent claims and the description which follows.

In one aspect of the present invention, there is provided a digital video tape reproducing method including a first mode for reproducing data recorded on a digital video tape at a 6.25Mbps bit rate, a second mode for reproducing data recorded on the tape at a 12.5Mbps bit rate and a third mode for reproducing data recorded on the tape at a 25Mbps bit rate, comprising the steps of: (a) reproducing the data recorded on the tape by increasing the tape travelling speed as N-times as a ratio of the higher bit rate to the lower bit rate and the head scanning speed as much as ratio when N-times speed trick-play operation is performed using the data recorded at the lower bit rate; and (b) demodulating DVB data reproduced by a head in a mode for trick-playing the tape having the data recorded at the higher bit rate with N/2-times speed.

Thus, according to the reproducing method, information recorded in a lower bit rate mode is reproduced in a higher bit rate mode, to impart a high-quality reproduced screen and facilitate the performance of trick-play operation.

Said number of the multiple (N) is preferably an even integer.

Preferably, in said demodulating step (b), intra-picture data, both said intra-picture data and forward-predicted picture data, or all of said intra-picture data, forward-predicted picture, and bi-directionally predicted picture data among the reproduced MPEG-2 video stream is selectively demodulated.

The tape travelling speed may increase 2N-times, the head scanning speed double and the data reproduced by the head is preferably demodulated according to a trick-play mode having the N/2-times speed of the second mode when the trick-play operation is performed using the data recorded at the 6.25Mbps bit rate.

The tape travelling speed may increase 4N-times, the head scanning speed quadruple and the data reproduced by the head is preferably demodulated according to a trick-play mode having an N/4-times speed of the second mode when the trick-play operation is performed using the data recorded at the 6.25Mbps bit rate.

The tape travelling speed may increase 2N-times, the head scanning speed double and the data reproduced by the head is preferably demodulated according to a trick-play mode having the N/2-times speed of the third mode when the trick-play operation is performed using the data recorded at the 12.5Mbps bit rate.

According to another aspect of the invention, there is provided a digital video tape reproducing method including a first mode for reproducing data recorded on a digital video tape at a 6.25Mbps bit rate, a second mode for reproducing data recorded on the tape at a 12.5Mbps bit rate and a third mode for reproducing data recorded on the tape at a 25Mbps bit rate, comprising the steps of:
(a) reproducing the data recorded on the tape by increasing the tape travelling speed as N-times as a ratio of the higher bit rate to lower bit rate and the head scanning speed as much as the ratio when N-times speed trick-play operation is performed using the data recorded at the lower bit rate, said N being an even integer; and
(b) demodulating DVB data reproduced by a head in a mode for normal-playing the tape having the data recorded at the higher bit rate with the speed corresponding to the higher bit rate.

The tape travelling speed may increase 2N-times, the head scanning speed double and the data reproduced by the head is preferably demodulated according to the second mode when N-times speed trick-play operation is performed using the data recorded at the 6.25Mbps bit rate.

The tape travelling speed may increase 4N-times, the head scanning speed quadruple and the data reproduced by the head is preferably demodulated according to the third mode when N-times speed trick-play operation is performed using the data recorded at the 6.25Mbps bit rate.

The tape travelling speed may increase 2N-times, the head scanning speed doubles and the data reproduced by the head is preferably demodulated according to the third mode when N-times speed trick-play operation is performed using the data recorded at the 12.5Mbps bit rate.

According to a third aspect of the present invention, there is provided a digital video tape reproducer for reproducing normal-play data or trick-play data from the tape on which DVB data of an MPEG-2 transport stream is recorded, comprising: a reproduction processor for reproducing the normal-play data and trick-play data from the DVB data recorded on the tape, according to a reproducing mode; a first multiple speed trick-play data extractor and buffer for extracting first multiple speed trick-play data from the output from the reproduction processor, and buffering the extracted data and outputting the result; a second multiple speed trick-play data extractor and buffer for extracting second multiple speed trick-play data from the output from the reproduction processor, and buffering the extracted data and outputting the result; a normal-play data extractor and buffer for extracting the normal-play data from the output from the reproduction processor, and buffering the extracted data and outputting the result; and a selector for selectively outputting the data output from the first multiple speed trick-play data extractor and buffer, the second multiple speed trick-play data extractor and buffer, and the normal-play data extractor and buffer according to the operation mode of the digital video tape reproducer.

Preferably, the reproducer further comprises: a transport layer header extractor for receiving the DVB data output from said normal-play data extractor and buffer, dividing the received DVB data into a transport layer header and an MPEG-2 video stream, and outputting the result; an MPEG-2 video layer header extractor for receiving the MPEG-2 video stream output from said transport layer header extractor, dividing the input into an MPEG-2 video layer header and an MPEG-2 video sequence, and outputting the result; side information storage means for buffering the transport layer header output from said transport layer header extractor and the MPEG-2 video layer header output from said MPEG-2 video layer header extractor, and outputting the result; a picture selector for receiving the MPEG-2 video sequence output from said MPEG-2 video layer header extractor and selectively extracting intra-picture data, both the intra-picture data and forward-predicted data, or all of the intra-picture data, forward-predicted picture data and bi-directionally predicted picture data; and a header processor for appending information of the transport layer header and the MPEG-2 video layer header to the data output from said picture selector with reference to the transport layer header and MPEG-2 video layer header stored in said side information storage means, wherein said selector selectively outputs the data provided from said header processor in a partitioned operating mode.

For a better understanding of the invention, and to show how embodiments of the same may be carried into effect, reference will now be made, by way of example, to the accompanying diagrammatic drawings, in which:
Figure 1 is a diagram showing the track structure of a conventional SD-VCR;
Figure 2 is a diagram showing the arrangement of video data sync blocks recorded according to the recording method of an embodiment of the present invention;
Figures 3A and 3B are diagrams showing an azimuth relation between the track and head forward-scanning at 5x speed, in a digital video tape recorder having an opposing-type head and in one having a pair-type head, respectively;
Figures 4A and 4B are diagrams showing an azimuth relation between the track and head forward-scanning at 4x speed, in a digital video tape recorder having an opposing-type head and in one having a pair-type head, respectively;
Figure 5 is a block diagram showing a digital video tape recorder according to embodiments of the present invention;
Figure 6 is a diagram showing the layer structure of the MPEG-2 video stream;
Figure 7 is a diagram showing an example of the MPEG-2 picture group;
Figure 8 is a diagram showing the frequency coefficients generated as the result of a discrete cosine transform (DCT) function in a matrix type; and
Figure 9 is a block diagram showing a digital video tape reproducer according to embodiments of the present invention.

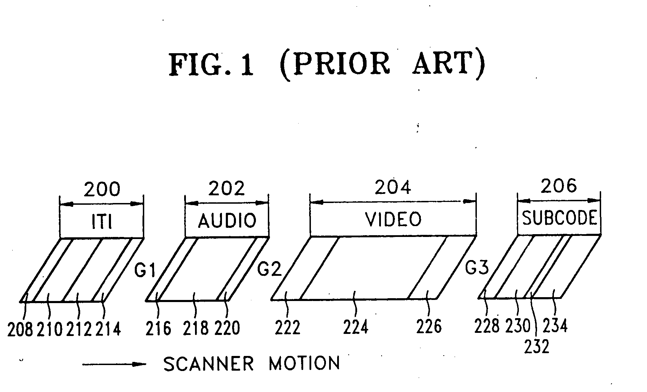

In Figure 1, the track is classified into an insert and track information (ITI) sector 200, an audio sector 202, a video sector 204 and a subcode sector 206, in sequence from the scanning starting point of the head. Also, there are gaps G1, G2 and G3 between each sector. ITI sector 200 includes an ITI pre-amble region 208, a start-sync block region 210, a track information region 212 and an ITI post-amble region 214. Audio sector 202 includes an audio pre-amble region 216, an audio data sync block 218 and an audio post-amble region 220. Video sector 204 includes a video pre-amble region 222, a video data sync block 224 and a video post-amble region 226. Subcode sector 206 includes a subcode pre-amble region 228, a subcode region 230, a subcode post-amble region 232 and an overwrite margin 234.

There are three types of digital video tape recorders for use in the European system, which are classified according to bit rate; that is, 25Mbps mode, 12.5Mbps mode and 6.25Mbps mode. The SD-VCR can be used for all three modes since it has a maximum bit rate of 25Mbps. The other modes can be accommodated by proper control (i.e., one half or one fourth reduction, as necessary) of the speed of the SD-VCR's drum.

However, as shown in Table 1, the bit amount used in each mode and the real bit amount applied by the SD-VCR are different, and the trick-play data can be recorded in the video sector using the difference.

**Table 1**

| mode | real bit rate | remaining sync blocks |
|---|---|---|
| 25Mbps | 19.3Mbps | 30 |
| 12.5Mbps | 9.6Mbps | 31 |
| 6.25Mbps | 4.8Mbps | 31 |

As shown in Table 1, since the 25Mbps mode bit rate for the SD-VCR is 25Mbps and that for the digital video tape is 19.3Mbps, there are 30 remaining sync blocks which can be used for the trick-play data. Likewise, there are 31 remaining sync blocks which can be used for the trick-play data in the 12.5Mbps and 6.25Mbps modes. However, since part of the sync blocks occupied by the normal-play video data can be used for the trick-play data, the real number of sync blocks assigned for trick-play operation may be increased.

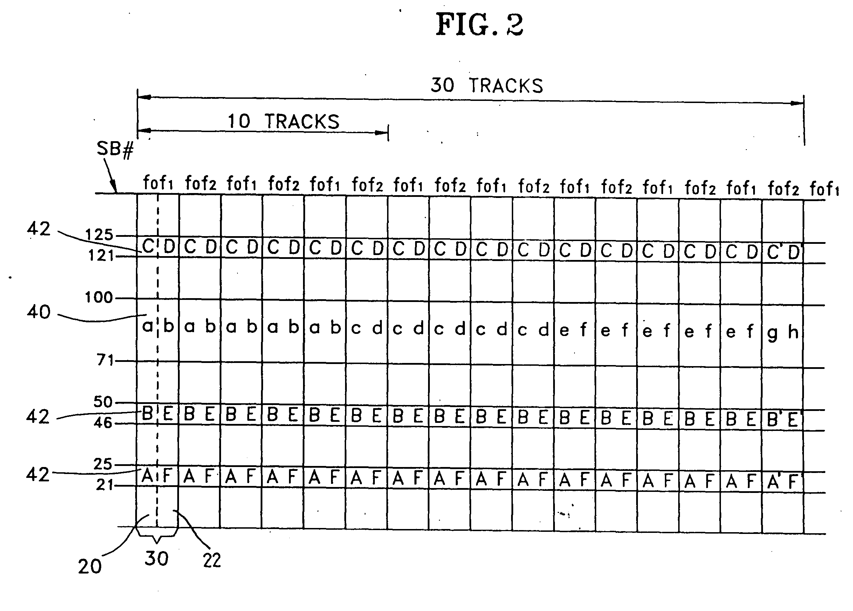

Figure 2 is a diagram showing the arrangement of video data sync blocks recorded according to the recording method of embodiments of the present invention. In Figure 2, the tape travels in the horizontal direction and the head scans the tape in the longitudinal direction. Here, a sync block number (SB#) is assigned to the sync blocks along the head scanning direction, such that head scanning is started from the bottom of Figure 2, at sync block 1, with the SB numbers increasing upward along the head scanning direction.

The track having a negative azimuth angle has an f₀ frequency characteristic and the track having a positive azimuth angle has an f₁ or f₂ frequency characteristic. The f₁ and f₂ frequency characteristics are alternately recorded in a track having the positive azimuth angle. Here, f₀, f₁ and f₂ are frequencies selected for performing tracking.

According to the recording method of embodiments of the present invention, the trick-play data is recorded in a first track pair 30 including a first track 20 and a second track 22 adjacent to first track 20 in the tape travelling direction. Also, the trick-play data recorded in first track pair 30 is repeatedly recorded in track pairs adjacent to first track pair 30. Here, the number of track pairs in which the data is recorded corresponds to the multiple of the playback speed for the trick-play data. Thus, the number of the multiple must be an integer since the number of track pairs is an integer.

In addition, since the trick-play data is recorded in a track pair consisting of two successive tracks, the multiple of the speed should be an odd integer, in order to control the head scanning phase during the trick-play operation.

The first multiple speed trick-play data is recorded in a first area 40 located in the middle of first track pair 30. First area 40 is experimentally selected as area which is commonly scanned by the opposing-type two heads disposed opposite each other and the pair-type two heads, when the heads scan at the multiple speed corresponding to the trick-play data. Here, in the selected area, the tapewidth scanned by the head should be more than 75% of the tapewidth of each track.

Each track has a second area 42 on which the second multiple speed trick-play data is recorded. Here, the second multiple speed is faster than the first multiple speed.

In the first area 40, the trick-play data of 5× speed are recorded in 30 sync blocks corresponding to the 71st to 100th tracks. In the second area 42, the trick-play data of 15× speed are recorded in fifteen sync blocks corresponding to the 21st to 25th, the 46th to 50th, and the 121st to 125th tracks. The location of first and second areas 40 and 42 is the same in the first and second tracks 20 and 22.

According to the recording method of embodiments of the present invention, N-times speed trick-play data is recorded in the track pair consisting of two adjacent tracks, and the same trick-play data as that recorded in the first track pair is repeatedly recorded in N adjacent track pairs, so that neither phase locking nor track selection are required, to thereby reduce hardware costs.

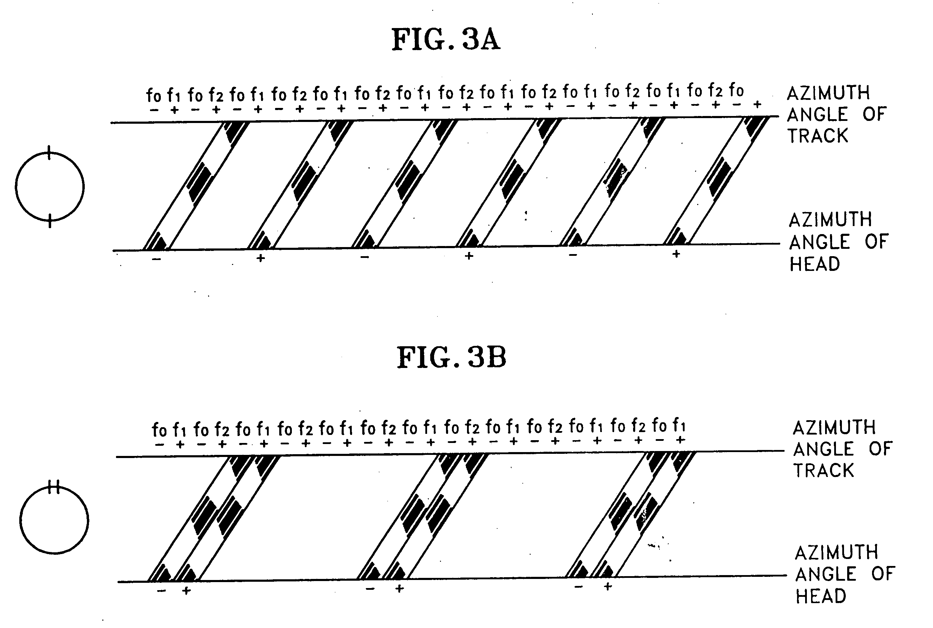

Figure 3A is a diagram showing an azimuth relation between the track and head, and the reproduced region when the head scans at 5× speed in a forward direction while the azimuth angles of track and head are in accord with each other, in a digital video tape recorder having the opposing-type head. As shown in Figure 3A, in the case where the azimuth angles of the track and head are in accord with each other, that is, are phase-locked, a leading end, a center, and a trailing end of the track are read out during the head scanning. Here, it is shown that the portions read out by the heads, each having positive and negative azimuth angles, are in accord with each other.

Figure 3B is a diagram showing an azimuth relation between the track and head, and the reproduced region when the head scans at 5× speed in a forward direction while the azimuth angles of the track and head are in accord with each other in a digital video tape recorder having the pair-type head. As shown in Figure 3B, in the case where the azimuth angles of the track and head are in accord with each other, that is, in a phase-locked state, a leading end, a center, and a trailing end of the track are read out during the head scanning. Here, it is shown that the portions read out by the heads, each having positive and negative azimuth angles, are in accord with each other.

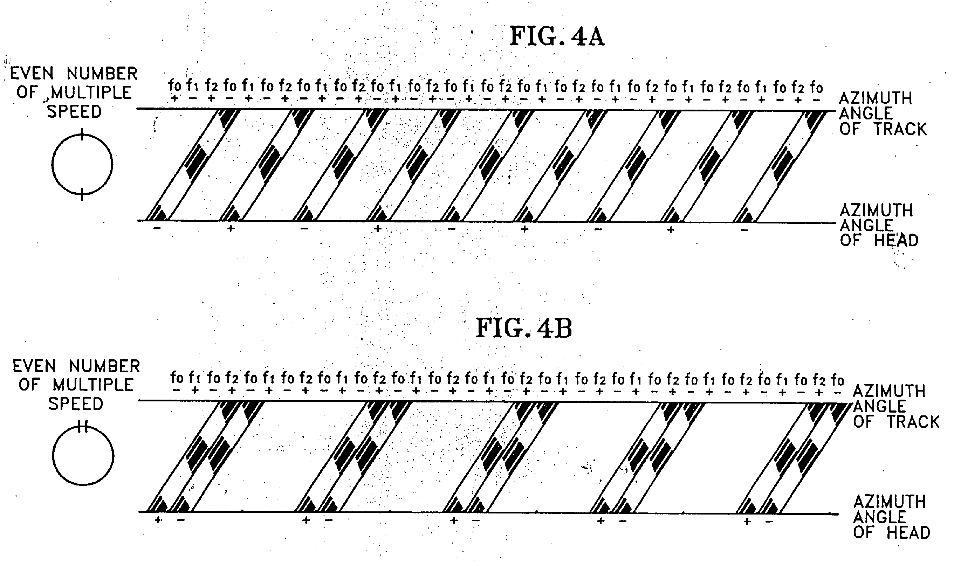

Figure 4A is a diagram showing an azimuth relation between the track and head, and the reproduced region when the head scans at 4× speed in a forward direction while the azimuth angles of the track and head are in accord with each other, in the digital video tape recorder having the opposing-type head. As shown in Figure 4A, in the case where the azimuth angles of the track and head are in accord with each other, that is, in a phase-locked state, the portions read out by the heads each having positive or negative azimuth angle during the head scanning are not always in accord with each other.

Figure 4B is a diagram showing an azimuth relation between the track and head, and the reproduced region when the head scans at 4× speed in a forward direction while the azimuth angles of the track and head are in accord with each other, in the digital video tape recorder having the pair-type head. As shown in Figure 4B, in the case where the azimuth angles of the track and head are in accord with each other, that is, in a phase-locked state, the portions read out by the heads each having positive or negative azimuth angle during the head scanning are in accord with each other.

As shown in Figures 3A and 4A, in a digital video tape recorder having an opposing-type head, the portions reproduced by the heads each having positive or negative azimuth angle are accord with each other for odd multiple speeds, but are not in accord with each other for even multiple speeds.

According to embodiments of the present invention, the odd multiples of speed for trick-play operation are adopted for providing the compatibility between the digital video tape recorders having the pair-type heads and opposing-type heads.

The trick-play data is composed of AC components and a DC component of DCT coefficients generated as a result of the DCT function. As the multiple of the trick-play speed increases, the number of AC components decreases accordingly. Since the number of AC components with respect to each multiple speed are selected according to design and/or the number of usable sync blocks, the detail description thereof will be omitted.

If the speed of the drum and tape is respectively reduced as much as a half in the 25Mbps mode, SD-VCR can be corresponded to 12.5Mbps, and if reduced as much as one fourth, SD-VCR can be corresponded to 6.25Mbps.

On the contrary, if the speed of the drum and tape is respectively increased twice at 6.25Mbps mode, SD-VCR can be corresponded to 12.5Mbps mode, which corresponds to 2× speed playback at 6.25Mbps mode. If the speed of the drum and tape is respectively increased 4× at 6.25Mbps mode, SD-VCR can be corresponded to 25Mbps mode, which corresponds 4× speed playback at 6.25Mbps mode.

Also, the speed of the drum and tape is respectively increased twice at 12.5Mbps mode, SD-VCR can be corresponded to 25Mbps mode, which corresponds to 2× speed playback at 12.5Mbps mode.

If the tape travelling speed increases 2N-times, the head scanning speed doubles and the signal reproduced by the head is demodulated according to an N/2-times speed trick-play mode of a mode with an N-times bit rate, the effect of 2N-times speed trick-play operation can be actually obtained. That is, if 5× speed trick-play data is recorded on the tape in which data is recorded at 6.25Mbps bit rate, according to the recording method of embodiments of the present invention, the effect of 10× speed trick-play operation can be obtained by reproducing the tape at 12.5Mbps. Here, if 15× speed trick-play data is recorded, the effect of 30× speed trick-play operation can be obtained.

Also, if 5× speed trick-play data is recorded on the tape in which the data is recorded at 6.25Mbps bit rate, according to the recording method of embodiments of the present invention, the effect of 20× speed trick-play operation is achieved by reproducing the tape at 25Mbps. Here, if 15× speed trick-play data is recorded, the effect of 60× speed trick-play operation can be obtained.

If 5× speed trick-play data is recorded on the tape in which the data is recorded at 12.5Mbps bit rate, according to the recording method of the present invention, the effect of 10× speed trick-play operation is achieved by reproducing the tape at 25Mbps. Here, if 15× speed trick-play data is recorded, the effect of 30× speed trick-play operation can be obtained.

Table 2 shows examples of trick play operation, according to the bit rate mode and the multiple of the trick-play speed.

**Table 2**

| recorded data type | performable multiple speed | | |
|---|---|---|---|
| | 6.25Mbps mode | 12.5Mbps mode | 25Mbps mode |
| normal | • 2× speed: | • 2× speed: | |
| | drum × 2 | drum × 2 | |
| | tape × 2 | tape × 2 | |
| | (corresponding to normal play at 12.5Mbps) | (corresponding to normal play at 25Mbps) | |
| | | | |
| | • 4× speed: | | |
| | drum × 4 | | |
| | tape × 4 | | |
| | (corresponding to normal play at 25Mbps) | | |
| 5× | • 5× speed | • 5× speed | • 5× speed |
| | • 10× speed: | • 10× speed: | |
| | drum × 2 | drum × 2 | |
| | tape × 5 × 2 | tape × 5 × 2 | |
| | (corresponding to 5× speed at 12.5Mbps) | (corresponding to 5× speed at 25Mbps) | |
| | | | |
| | • 20× speed: | | |
| | drum × 4 | | |
| | tape × 5 × 4 | | |
| | (corresponding to 5× speed at 25Mbps) | | |
| 15× | • 15× speed | • 15× speed | • 15× speed |
| | • 30× speed: | • 30× speed: | |
| | drum × 2 | drum × 2 | |
| | tape × 15 × 2 | tape × 15 × 2 | |
| | (corresponding to 15× speed at 12.5Mbps) | (corresponding to 15× speed at 25Mbps) | |
| | • 60× speed: | | |
| | drum × 4 | | |
| | tape × 15 × 4 | | |
| | (corresponding to 15× speed at 25Mbps) | | |

According to the reproducing method of embodiments of the present invention, trick-play operation providing a good quality picture can be easily performed by reproducing information recorded with the lower bit rate mode using the higher bit rate mode.

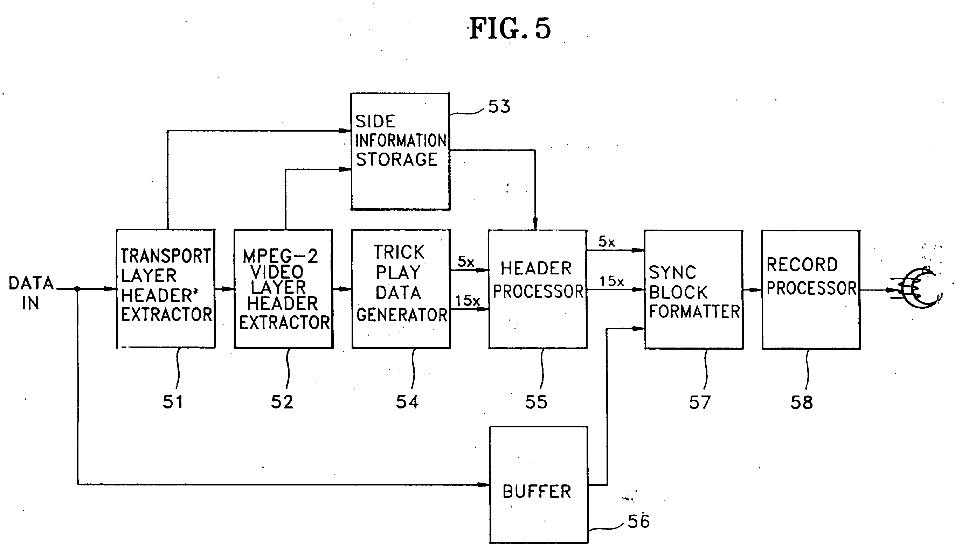

Figure 5 is a block diagram showing a digital video tape recorder according to an embodiment of the present invention. The digital video tape recorder shown in Figure 5 comprises a transport layer header extractor 51, an MPEG-2 video layer header extractor 52, a side information storage 53, a trick-play data generator 54, a header processor 55, a buffer 56, a sync block formatter 57, and a record processor 58.

Transport layer header extractor 51 receives the DVB data of an MPEG-2 transport stream, divides the DVB data into a transport layer header and an MPEG-2 video stream and outputs the result.

MPEG-2 video layer header extractor 52 receives the MPEG-2 video stream output from transport layer header extractor 51, divides the input into the required MPEG-2 video layer header and MPEG-2 video sequence, and outputs the result.

Side information storage 53 buffers the transport layer header output from transport layer header extractor 52 and the MPEG-2 video layer header output from MPEG-2 video layer header extractor 52, and outputs the result.

Trick-play data generator 54 receives the MPEG-2 video sequence output from MPEG-2 video layer header extractor 52, and generates the trick-play data.

Header processor 55 appends information of the transport layer header and the MPEG-2 video layer header to the trick-play data generated from trick-play data generator 54, with reference to the transport layer header and MPEG-2 video layer header stored in side information storage 53.

Buffer 56 buffers the DVB data of the MPEG-2 transport stream, and outputs the result.

Sync block formatter 57 reformats the trick-play data to which the header information output from header processor 55 is appended, and the MPEG-2 video stream output from buffer 56, into sync blocks suitable for the SD-VCR.

Record processor 58 performs channel-coding with respect to the data with the sync block arrangement output from sync block formatter 57 and records the result on the tape.

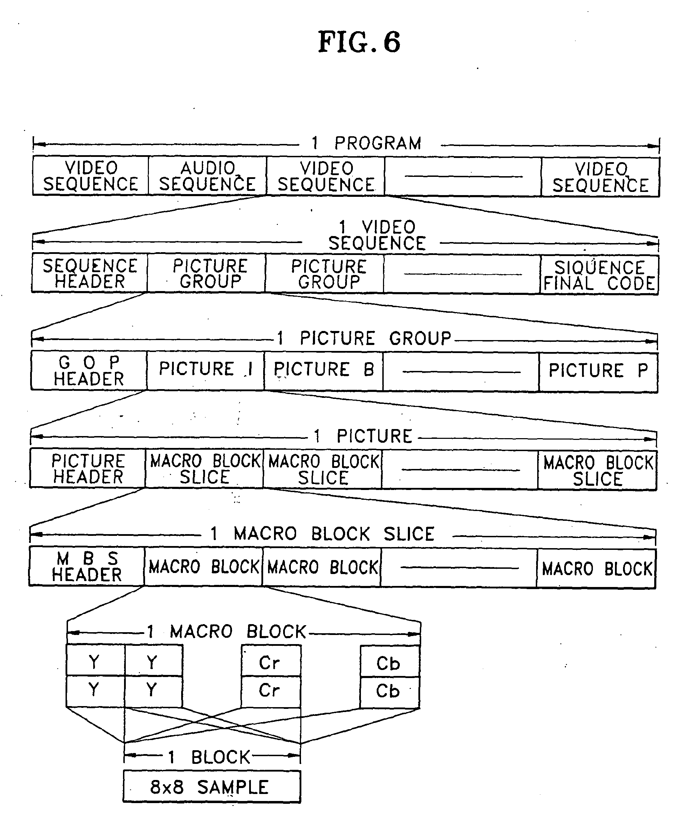

The digital video tape recorder receives the picture data of the MPEG-2 transport stream. Figure 6 is a diagram showing the layer structure of the MPEG-2 video stream. As shown in Figure 6, a program is defined as the assembly of interleaved video sequences and audio sequences. The video sequence is composed of one or more picture groups and a picture group is composed of one or more pictures. Here, each picture is composed of one or more macroblock slices each of which is composed of one or more macroblocks. The macro block comprises one luminance signal block and two color difference signal blocks in accordance with the construction of a color signal. Here, each block is an 8x8-sized DCT block.

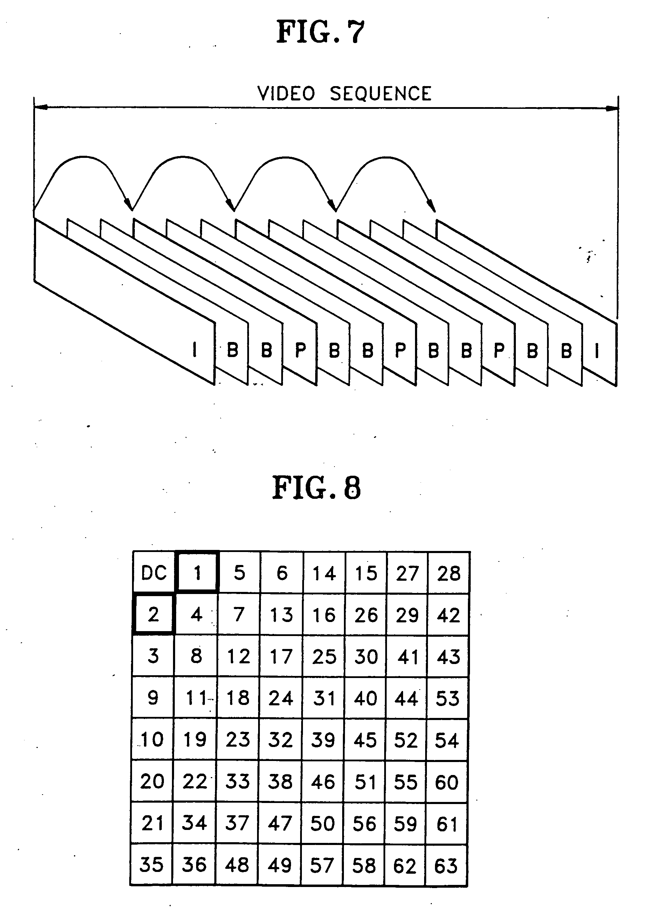

Figure 7 is a diagram showing an example of the picture group. A reference frame is inserted into the MPEG-2 picture group so as to restore the picture within an arbitrary location. This reference frame is called an intra-picture which is encoded by intra-coding which is similar with Joint Picture Engineering Group's (JPEG) method. A plurality of forward-predicted pictures and bi-directionally predicted pictures are placed between adjacent intra-pictures. Here, the forward-predicted picture is generated from the intra-picture using information such as a motion vector. Differently from the forward-predicted picture, the bi-directionally predicted picture is generated from the previous forward predicted picture, the next forward predicted picture or both using interpolation. Here, the interpolation is not performed directly but is performed after motion vector is searched and compensated. Also, interpolation is not always performed but a method having the least error is applied for the interpolation after interpolation by block, forward and backward predictions, and the bi-directional prediction.

Trick-play data generator 54 generates trick-play data using the data of the intra-picture.

Figure 8 is a diagram showing the frequency coefficients generated as the result of the DCT function in a matrix type. In Figure 8, a DC coefficient is at the left higher and the remaining coefficients are AC coefficients. As the result of the DCT function, the picture signal of the time domain is converted into the picture signal of the frequency domain. The DCT has a characteristic in that the energy is concentrated on the lower frequency domain by the transform. The trick-play data consists of AC and DC components. As the number of AC coefficient increases, the quality of the reproduced picture is improved. Generally, the number of AC coefficients is determined by the multiple speed number of the trick-play data.

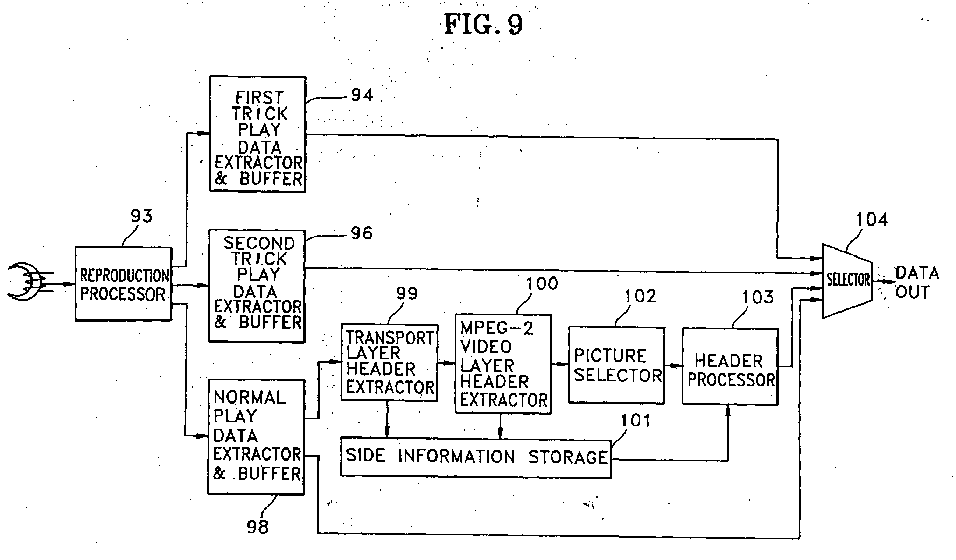

Figure 9 is a block diagram showing a digital video tape reproducer according to an embodiment of the present invention. The digital video tape reproducer shown in Figure 9 comprises a reproduction processor 93, a first multiple speed trick-play data extractor and buffer 94, a second multiple speed trick-play data extractor and buffer 96, a normal-play data extractor and buffer 98, a transport layer header extractor 99, an MPEG-2 video layer header extractor 100, a side information storage 101, a picture selector 102, a header processor 103, and a selector 104.

Reproduction processor 93 reproduces the normal-play data and trick-play data from the DVB data of the MPEG-2 transport stream recorded on the tape, according to the reproducing mode. Here, an equalizer for each mode can be included.

First multiple speed trick-play data extractor and buffer 94 extracts the first multiple speed trick-play data from the data stream output from reproduction processor 93, buffers the extracted data and outputs the result.

Second multiple speed trick-play data extractor and buffer 96 extracts the second multiple speed trick-play data from the data stream output from reproduction processor 93, buffers the extracted data and outputs the result.

Normal-play data extractor and buffer 98 extracts the normal-play data from the data stream output from reproduction processor 93, buffers the extracted data and outputs the result.

Transport layer header extractor 99 receives the DVB data of the MPEG-2 transport stream output from normal-play data extractor and buffer 98, divides the received DVB data into a transport layer header and an MPEG-2 video stream, and outputs the result.

MPEG-2 video layer header extractor 100 receives the MPEG-2 video stream output from transport layer header extractor 99, divides the received MPEG-2 video stream into a required MPEG-2 video layer header and an MPEG-2 video sequence, and outputs the result.

Side information storage 101 buffers the transport layer header output from transport layer header extractor 99 and the MPEG-2 video layer header output from the MPEG-2 video layer header extractor 100, and outputs the result.

Picture selector 102 receives the MPEG-2 video sequence output from MPEG-2 video layer header extractor 100, and extracts and outputs the intra-picture data. As necessary, the forward-predicted picture or the bi-directionally predicted picture can be selected.

Header processor 103 appends the transport layer header information and the required MPEG-2 video layer header information to the intra-picture data output from picture selector 102 with reference to the transport layer header and MPEG-2 video layer header stored in side information storage 101 and outputs the result.

Selector 104 selectively outputs the data output from first multiple speed trick-play data extractor and buffer 94, second multiple speed trick-play data extractor and buffer 96, and normal-play data extractor and buffer 98.

The operation of the digital video tape reproducer shown in Figure 9 will be described in detail. A capstan motor and drum motor (not shown) rotate at a predetermined speed prescribed according to the reproducing mode. Here, the rotary speed of the drum may be fixed at 9000 rpm. Head 107 reproduces the signal recorded on the tape and then provides the reproduced signal to reproduction processor 93.

The reproduced signal output from reproduction processor 93 is provided to first multiple speed trick-play data extractor and buffer 94, second multiple speed trick-play data extractor and buffer 96, and normal-play data extractor and buffer 98.

First multiple speed trick-play data extractor and buffer 94 operates in the 5× speed trick-play mode and extracts the 5× speed trick-play data from the trick-play data recorded by the recorder of Figure 5, and buffers and outputs the result. The 5× speed trick-play data output from first multiple speed trick-play data extractor and buffer 94 is provided to a first input of selector 104.

Second multiple speed trick-play data extractor and buffer 96 operates in the 15× speed trick-play mode and extracts the 15× speed trick-play data from the trick-play data recorded by the recorder of Figure 5, and buffers and outputs the result. The 15× speed trick-play data output from second multiple speed trick-play data extractor and buffer 96 is provided to a second input of selector 104.

Normal-play data extractor and buffer 98 operates in the normal-play mode, extracts the normal-play data recorded by recorder of Figure 5, and buffers and outputs the result. The normal-play data output from normal-play data extractor and buffer 98 is provided to transport layer header extractor 99 and a fourth input of selector 104.

Transport layer header extractor 99, MPEG-2 video layer header extractor 100, side information storage 101, picture selector 102 and header processor 103 are provided for extracting the required picture information from the MPEG-2 video stream when the trick-play data recorded with the lower bit rate mode are trick-played with the higher bit rate mode.

The MPEG-2 video sequence as shown in Figures 6 and 7 is extracted from the MPEG-2 transport stream reproduced by head 107, via transport layer header extractor 99 and MPEG-2 video layer header extractor 100.

Picture selector 102 extracts the intra-picture data from the MPEG-2 video sequence extracted from MPEG-2 video layer header extractor 100 and provides the result to header processor 103. Since one or more intra-pictures as an independently decodable picture are included in each picture group, only the intra-picture can be extracted from the MPEG-2 video stream so as to construct the reproduced picture (a partitioned operating mode).

Header processor 103 receives the data of the extracted intra-picture, appends header information to the input data with reference to the transport layer header information and the MPEG-2 video layer header information stored in side information storage 101, and provides the result to a third input of selector 104.

Selector 104 selectively outputs one of the data input via first to fourth inputs according to the reproducing mode.

As described above, according to the recording method, N-times speed trick-play data is recorded in a track pair consisting of two adjacent tracks, and the same trick-play data is repeatedly recorded in the N adjacent track pairs, so that phase locking and a track selection are not required, to thereby reduce the cost of the hardware.

According to the reproducing method the information recorded with the lower bit rate mode is reproduced with the higher bit rate mode, so that trick-play operation having a good picture quality can be easily performed.

Although a few preferred embodiments have been shown and described, it will be appreciated by those skilled in the art that various changes and modifications might be made without departing from the scope of the invention, as defined in the appended claims.

## Claims

1. A digital video tape reproducing method including a first mode for reproducing data recorded on a digital video tape at a 6.25Mbps bit rate, a second mode for reproducing data recorded on the tape at a 12.5Mbps bit rate and a third mode for reproducing data recorded on the tape at a 25Mbps bit rate, **characterised by** the steps of:
(a) reproducing the data recorded on the tape by increasing the tape travelling speed as N-times as a ratio of the higher bit rate to the lower bit rate and the head scanning speed as much as ratio when N-times speed trick-play operation is performed using the data recorded at the lower bit rate; and
(b) demodulating DVB data reproduced by a head in a mode for trick-playing the tape having the data recorded at the higher bit rate with N/2-times speed.

2. The reproducing method of claim 1, wherein said number of the multiple (N) is an even integer.

3. The reproducing method of claim 1 or 2, wherein in said demodulating step (b), intra-picture data, both said intra-picture data and forward-predicted picture data, or all of said intra-picture data, forward-predicted picture, and bi-directionally predicted picture data among the reproduced MPEG-2 video stream is selectively demodulated.

4. The reproducing method of claim 1, 2, or 3, wherein the tape travelling speed increases 2N-times, the head scanning speed doubles and the data reproduced by the head is demodulated according to a trick-play mode having the N/2-times speed of the second mode when the trick-play operation is performed using the data recorded at the 6.25Mbps bit rate.

5. The reproducing method of claim 2, wherein the tape travelling speed increases 4N-times, the head scanning speed quadruples and the data reproduced by the head is demodulated according to a trick-play mode having an N/4-times speed of the second mode when the trick-play operation is performed using the data recorded at the 6.25Mbps bit rate.

6. The reproducing method of claim 2, wherein the tape travelling speed increases 2N-times, the head scanning speed doubles and the data reproduced by the head is demodulated according to a trick-play mode having the N/2-times speed of the third mode when the trick-play operation is performed using the data recorded at the 12.5Mbps bit rate.

7. A digital video tape reproducing method including a first mode for reproducing data recorded on a digital video tape at a 6.25Mbps bit rate, a second mode for reproducing data recorded on the tape at a 12.5Mbps bit rate and a third mode for reproducing data recorded on the tape at a 25Mbps bit rate, comprising the steps of:
(a) reproducing the data recorded on the tape by increasing the tape travelling speed as N-times as a ratio of the higher bit rate to lower bit rate and the head scanning speed as much as the ratio when N-times speed trick-play operation is performed using the data recorded at the lower bit rate, said N being an even integer; and
(b) demodulating DVB data reproduced by a head in a mode for normal-playing the tape having the data recorded at the higher bit rate with the speed corresponding to the higher bit rate.

8. The reproducing method of claim 7, wherein the tape travelling speed increases 2N-times, the head scanning speed doubles and the data reproduced by the head is demodulated according to the second mode when N-times speed trick-play operation is performed using the data recorded at the 6.25Mbps bit rate.

9. The reproducing method of claim 8, wherein the tape travelling speed increases 4N-times, the head scanning speed quadruples and the data reproduced by the head is demodulated according to the third mode when N-times speed trick-play operation is performed using the data recorded at the 6.25Mbps bit rate.

10. The reproducing method of claim 7, wherein the tape travelling speed increases 2N-times, the head scanning speed doubles and the data reproduced by the head is demodulated according to the third mode when N-times speed trick-play operation is performed using the data recorded at the 12.5Mbps bit rate.

11. A digital video tape reproducer for reproducing normal-play data or trick-play data from the tape on which DVB data of an MPEG-2 transport stream is recorded, **characterised by**:
a reproduction processor (93) for reproducing the normal-play data and trick-play data from the DVB data recorded on the tape, according to a reproducing mode;
a first multiple speed trick-play data extractor and buffer (94) for extracting first multiple speed trick-play data from the output from said reproduction processor (93), and buffering the extracted data and outputting the result;
a second multiple speed trick-play data extractor and buffer (96) for extracting second multiple speed trick-play data from the output from said reproduction processor (93), and buffering the extracted data and outputting the result;
a normal-play data extractor and buffer (98) for extracting the normal-play data from the output from said reproduction processor (93), and buffering the extracted data and outputting the result; and
a selector (104) for selectively outputting the data output from said first multiple speed trick-play data extractor and buffer (94), said second multiple speed trick-play data extractor and buffer (96), and said normal-play data extractor and buffer (98) according to the operation mode of said digital video tape reproducer.

12. The reproducer of claim 11, further comprising:
a transport layer header extractor (99) for receiving the DVB data output from said normal-play data extractor and buffer (98), dividing the received DVB data into a transport layer header and an MPEG-2 video stream, and outputting the result;
an MPEG-2 video layer header extractor (100) for receiving the MPEG-2 video stream output from said transport layer header extractor (99), dividing the input into an MPEG-2 video layer header and an MPEG-2 video sequence, and outputting the result;
side information storage means (101) for buffering the transport layer header output from said transport layer header extractor (99) and the MPEG-2 video layer header output from said MPEG-2 video layer header extractor (100), and outputting the result;
a picture selector (102) for receiving the MPEG-2 video sequence output from said MPEG-2 video layer header extractor (100) and selectively extracting intra-picture data, both the intra-picture data and forward-predicted data, or all of the intra-picture data, forward-predicted picture data and bi-directionally predicted picture data; and
a header processor (103) for appending information of the transport layer header and the MPEG-2 video layer header to the data output from said picture selector (102) with reference to the transport layer header and MPEG-2 video layer header stored in said side information storage means (101), wherein said selector (104) selectively outputs the data provided from said header processor (103) in a partitioned operating mode.

13. The reproducer of claim 11 or 12, wherein the reproducer is arranged to perform the steps of:
(a) reproducing the data recorded on the tape by increasing the tape travelling speed as N-times as a ratio of the higher bit rate to the lower bit rate and the head scanning speed as much as ratio when N-times speed trick-play operation is performed using the data recorded at the lower bit rate; and
(b) demodulating DVB data reproduced by a head in a mode for trick-playing the tape having the data recorded at the higher bit rate with N/2-times speed.

14. The reproducer of claim 11 or 12, wherein the reproducer is arranged to perform the steps of:
(a) reproducing the data recorded on the tape by increasing the tape travelling speed as N-times as a ratio of the higher bit rate to the lower bit rate and the head scanning speed as much as ratio when N-times speed trick-play operation is performed using the data recorded at the lower bit rate; and
(b) demodulating DVB data reproduced by a head in a mode for normal-playing the tape having the data recorded at the higher bit rate with the speed corresponding to the higher bit rate.
